# FASCICULE DE BREVET EUROPEEN

(11) **EP 3 552 100 B1**
(45) Date de publication et mention de la délivrance du brevet: **11.05.2022**
(21) Numéro de dépôt: 17817803.4
(22) Date de dépôt: 30.11.2017
(51) Int. Cl.: G06F 9/455, G06F 9/50, G06F 9/54, G06F 8/35, H04L 12/24, G06F 9/44

(54) **PROCÉDÉ ET DISPOSITIF DE GESTION DES FONCTIONS LOGICIELLES VIRTUALISÉES DANS UN RÉSEAU**
VERFAHREN UND VORRICHTUNG ZUM VERWALTEN VON VIRTUALISIERTEN SOFTWARE FUNKTIONEN IN EINEM NETZWERK
METHOD AND APPARATUS FOR MANAGING VIRTUALIZED SOFTWARE FUNCTIONS IN A NETWORK

(30) Priorité: 07.12.2016 FR 1662063
(43) Date de publication de la demande: 16.10.2019
(73) Titulaire: ORANGE, 92130 Issy-les-Moulineaux (FR)
(72) Inventeur: HE, Ruan, 92326 Châtillon Cedex (FR); CHAWKI, Jamil, 92326 Châtillon Cedex (FR)
(86) Numéro de dépôt international: PCT/FR2017/053328
(87) Numéro de publication internationale: WO 2018/104624

(56) Documents cités:
- Anonymous: "Network Functions Virtualisation (NFV); Management and Orchestration", ETSI GS NFV-MAN 001 V1.1.1, décembre 2014 (2014-12), pages 1-184, XP055383931, Extrait de l'Internet: URL:http://www.etsi.org/deliver/etsi_gs/NF V-MAN/001_099/001/01.01.01_60/gs_NFV-MAN00 1v010101p.pdf [extrait le 2017-06-22] cité dans la demande
- MEDVED JAN ET AL: "OpenDaylight: Towards a Model-Driven SDN Controller architecture", PROCEEDING OF IEEE INTERNATIONAL SYMPOSIUM ON A WORLD OF WIRELESS, MOBILE AND MULTIMEDIA NETWORKS 2014, IEEE, 19 juin 2014 (2014-06-19), pages 1-6, XP032656432, DOI: 10.1109/WOWMOM.2014.6918985

## Description

### Arrière-plan de l'invention

L'invention se situe dans le domaine général de la virtualisation des fonctions dans un réseau de télécommunication.

On rappelle que la virtualisation de fonction réseau (en anglais « Network Function Virtualisation », VNF) désigne la mise en œuvre de fonctions logicielles réseau virtualisées, sur une infrastructure, par exemple en nuage (en anglais « cloud computing »), ces fonctions pouvant fonctionner sur du matériel informatique générique et être instanciées ou déplacées dans divers endroits du réseau en fonction des besoins des opérateurs.

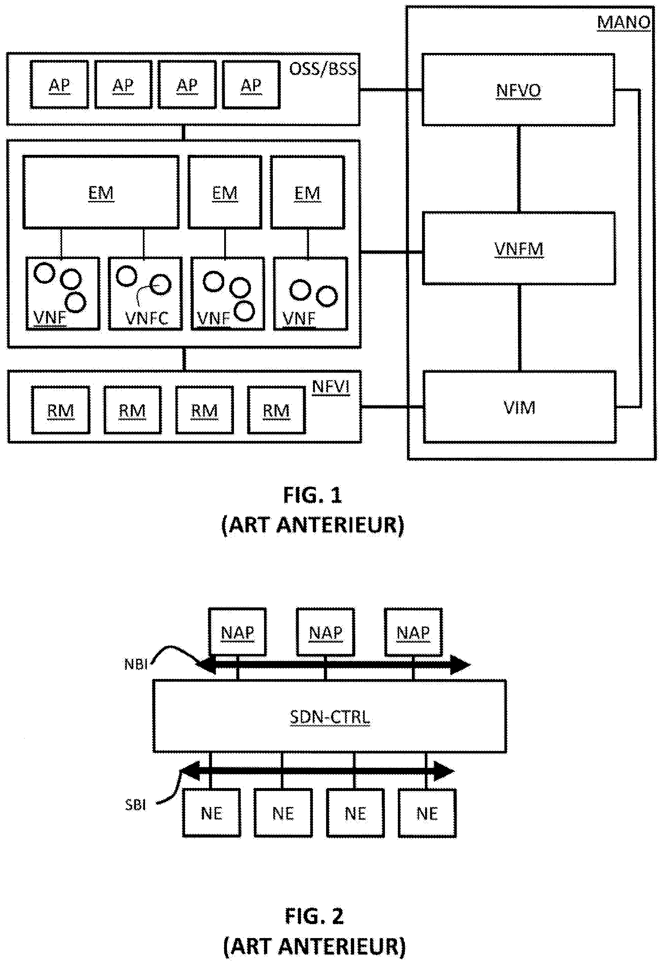

La **figure 1** représente une architecture définie par l'ETSI (European Telecommunications Standards Institute) dans le cadre du projet « NFV », cette architecture (ci-après « architecture NFV ») étant conforme au modèle réseau de gestion des télécommunications (en anglais « Telecommunication Management Network », TMN) des normes ITU-T M.3010, M.3400.

Conformément à cette architecture NFV, des fonctions logicielles virtualisées VNF (en anglais « Virtual Network Function » VNF) s'exécutent sur une infrastructure NFVI (en anglais « NFV Infrastructure », NFVI), par exemple en nuage, composée de ressources matérielles RM de base aptes à mettre en œuvre par exemple des opérations réseau, des opérations de calcul, de stockage.

Chaque fonction logicielle virtualisée VNF est implémentée par un ou plusieurs composants VNFC appelé(s) aussi « machine(s) virtuelle(s) ». Au niveau fonctionnel, chaque fonction logicielle virtualisée VNF est gérée par un élément de gestion EM (en anglais « Element Manager »), ces éléments de gestion EM étant en lien avec des applications AP opérationnelles et métier (en anglais « Operational Support System » OSS et « Business Support System » BSS).

Conformément à cette architecture NFV, le déploiement, l'exécution et l'exploitation des fonctions logicielles virtualisées VNF sont pilotés par des fonctions MANO de gestion et d'exploitation (en anglais « Management and Orchestration », MANO) comprenant :
- un orchestrateur NFVO (en anglais « NFV Orchestrator »), en interaction avec les applications AP opérationnelles et métier et en charge du cycle de vie des services réseau ;
- un gestionnaire VNFM (en anglais « VNF Manager »), en interaction avec les éléments de gestion EM et en charge du cycle de vie des fonctions logicielles virtualisées VNF ;
- un gestionnaire VIM (en anglais « Virtualized Infrastructure Manager »), en charge de la gestion des ressources matérielles RM de l'infrastructure NFVI.

Dans l'état actuel de la technique, lorsqu'une nouvelle fonction logicielle virtualisée VNF est installée dans le réseau, l'administrateur de ce réseau doit ajouter manuellement un élément de gestion EM dédié à cette fonction.

Le document intitulé "Network Functions Virtualisation (NFV); Management and Orchestration" a été publié sous la référence "ETSI GS NFV-MAN 001 V1.1.1" en décembre 2014 par l'institut européen des standards télécommunications (ETSI). Ce document divulgue une spécification relative aux fonctions logicielles réseau virtualisées et à leur gestion au sein d'une architecture de type « Network Function Virtualisation » (NFV) de l'art antérieur.

L'article de Jan Medved et AL intitulé "OpenDaylight: Towards a Model-Driven SDN Controller architecture", publié le 19 juin 2014 (Proceeding of IEEE International Symposium on a World of Wireless, Mobile and Multimedia Networks 2014), décrit une nouvelle architecture d'un contrôleur SDN, qui utilise la technologie orientée-modèle pour prendre en compte dynamiquement des nouveaux éléments de réseau.

L'invention propose un mécanisme de gestion de la virtualisation d'un réseau qui ne présente pas ces inconvénients.

### Objet et résumé de l'invention

A cet effet, l'invention concerne un procédé de gestion des fonctions logicielles réseau virtualisées dans un réseau de communication, les fonctions logicielles réseau virtualisées étant mises en œuvre sur une architecture de type « Network Function Virtualisation » (architecture NFV).

Ce procédé comporte :
- une étape de réception par un dispositif de contrôle, d'un modèle de données décrivant la fonctionnalité d'une fonction logicielle réseau virtualisée ;
- une étape de génération par ledit dispositif de contrôle, à partir dudit modèle de données reçu, d'une interface de configuration définissant ladite fonctionnalité, ladite interface de configuration étant une classe Java et étant destinée à être utilisée pour invoquer ladite fonction logicielle réseau virtualisée ;
- une étape de génération par le dispositif de contrôle d'un premier agent logiciel qui implémente cette interface de configuration générée, et une étape d'installation de ce premier agent logiciel dans le dispositif de contrôle, cet premier agent étant configuré pour permettre, lorsqu'il est invoqué par ladite interface de configuration, l'appel d'une machine virtuelle mettant en œuvre la fonction logicielle réseau virtualisée.

Corrélativement l'invention concerne un dispositif de contrôle des fonctions logicielles réseau virtualisées dans un réseau de communication, les fonctions logicielles réseau virtualisées étant mises en œuvre sur une architecture de type « Network Function Virtualisation» (architecture NFV).

Ce dispositif comporte :
- un module de réception d'un modèle de données décrivant la fonctionnalité d'une fonction logicielle réseau virtualisée;
- un module de génération d'une interface de configuration, à partir dudit modèle de données, définissant cette fonctionnalité, cette interface de configuration étant une classe Java et étant destinée à être utilisée pour invoquer la fonction logicielle réseau virtualisée;
- un module de génération et d'installation dans le dispositif, d'un premier agent logiciel qui implémente cette interface de configuration générée, ce premier agent étant configuré pour permettre, lorsqu'il est invoqué, l'appel d'une machine virtuelle mettant en œuvre ladite fonction logicielle réseau virtualisée;
- un module configuré pour, lorsqu'il est appelé pour invoquer, en utilisant ladite interface de configuration, ladite fonction logicielle réseau virtualisée, appeler une machine virtuelle mettant en œuvre la fonction logicielle réseau virtualisée.

Ainsi, et d'une façon générale, l'invention propose d'enrichir l'architecture SDN pour permettre la gestion de fonctions logicielles virtualisées.

On rappelle que l'architecture SDN (en anglais « Software-defined Networking ») propose de découpler les fonctions de contrôle du réseau des fonctions d'acheminement des données à proprement parler, de sorte (i) à permettre le contrôle du réseau par des fonctions logicielles programmables et (ii) à isoler l'infrastructure sous-jacente du réseau des applications et services réseau. Selon la recommandation Y.3300 (« Framework of software-defined networking ») de l'organisme de normalisation ITU-T (en anglais « International Telecommunication Union - Telecommunication »), l'architecture SDN est définie comme un ensemble de techniques permettant de programmer, d'orchestrer, de contrôler et de gérer directement les ressources du réseau, ce qui facilite la conception, la fourniture et l'exploitation de services réseau de manière dynamique et évolutive.

La couche de contrôle SDN, ou contrôleur SDN (en anglais « SDN contrôle layer ») fournit un moyen pour contrôler dynamiquement le comportement des ressources/éléments du réseau selon les instructions d'une application SDN. Les applications SDN spécifient comment les ressources réseau doivent être contrôlées et allouées, en interagissant avec la couche de contrôle SDN via les interfaces de contrôle d'application NBI (en anglais « North Bound Interface » NBI).

Les informations de commande de la couche de contrôle SDN vers les ressources/éléments de réseau sont ensuite délivrées via des interfaces de contrôle de ressources SBI (en anglais « South Bound Interface). La configuration et/ou les propriétés exposées aux applications SDN sont abstraites au moyen de modèles d'information et de données.

Cette architecture SDN permet ainsi la mise en œuvre d'une plateforme logicielle (dite « plateforme SDN ») programmable et flexible offrant une vue globale et logique du réseau et une gestion dynamique des ressources hétérogènes du réseau. La plateforme SDN est ouverte à un ensemble d'interfaces, notamment SNMP, Netconf, Openflow et PCEP.

Plus précisément, et en référence à la **figure 2**, l'architecture SDN est structurée en trois couches principales, séparées entre elles par les interfaces SBI, NBI, à savoir :
- une couche de ressources réseau constituée par des éléments de réseau NE (en anglais « Network Elements ») physiques ou virtuels, par exemple des routeurs, commutateurs, réseaux de diffusion de contenus (en anglais « Content Delivery Network », CDN) ;
- un contrôleur SDN SDN-CTRL comportant des fonctions d'abstraction et de programmation des éléments de réseau NE de la couche de ressources réseau et offrant des gestionnaire de service de base comme la gestion des nœuds et des liens associés ;
- une couche de services applicatifs réseau NAP (en anglais « Network Applications ») comportant un ensemble d'applications de gestion (par exemple de gestion de VPN), de supervision, de connectivité vers une plateforme d'un réseau en nuage.

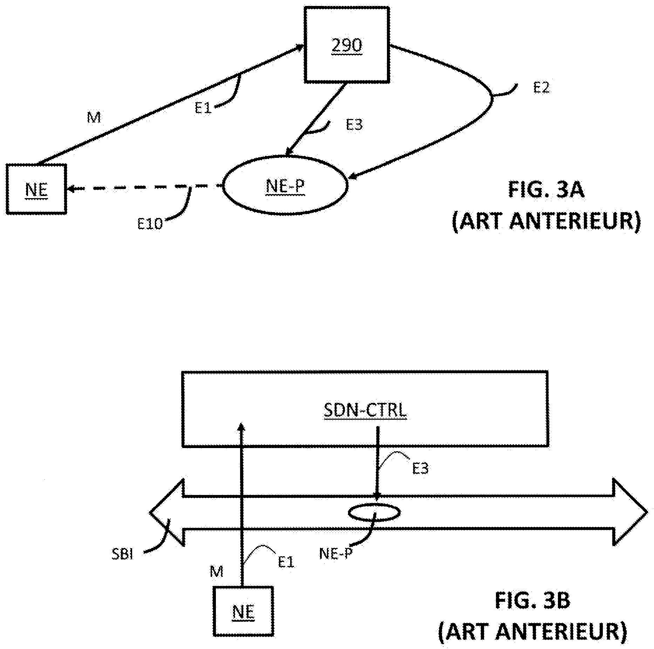

La **figure 3A** représente schématiquement la technologie orientée-modèle (en anglais « model-oriented ») OpenDaylight proposée par le consortium du même nom, et permettant à un contrôleur SDN de prendre en compte dynamiquement des nouveaux éléments de réseau NE.

Plus précisément, lorsqu'un nouvel élément de réseau NE rejoint le réseau, il s'enregistre, au cours d'une étape E1, auprès du contrôleur SDN SDN-CTRL, en lui envoyant, via l'interface SBI, un modèle M décrivant sa fonctionnalité.

Au cours d'une étape E2, le contrôleur SDN SDN-CTRL génère une interface réseau (à savoir une classe java Network Interface) à partir du modèle M, puis au cours d'une étape E3 un agent NE-P (Network Element Plug-In).

Cet agent permet à un module de contrôle 292 du contrôleur SDN SDN-CTRL d'accéder à l'élément de réseau NE et de le contrôler (au cours d'une étape générale E10).

La **figure 3B** représente l'envoi, par un élément réseau NE, du modèle M au contrôleur SDN SDN-CTRL (étape E1) et l'installation de l'agent NE-P au niveau de l'interface SBI (étape E3).

L'invention propose donc un mécanisme de gestion des fonctions logicielles virtualisés VNF dans un réseau dans lequel ces fonctions logicielles VNF sont gérées selon une approche orientée-modèle (model-driven) et non plus via des éléments de gestion EM statiques créés et installés manuellement par un opérateur humain.

Elle étend ainsi la notion de contrôleur SDN à la gestion des fonctions virtualisées VNF et introduit le nouveau concept de contrôleur VNF (en anglais « VNF controller »).

Dans un mode de réalisation, le procédé de gestion selon l'invention comporte en outre :
- une étape de génération et d'installation d'un deuxième agent logiciel destiné à être exécuté sur invocation du premier agent logiciel, ce deuxième agent étant apte à sélectionner la machine virtuelle, en prenant compte des contraintes de répartition de charge, pour gérer la répartition de charge de la fonction logicielle virtualisée.

Ce deuxième agent logiciel est ainsi utilisé pour gérer de façon flexible le dimensionnement et la répartition de charge (en anglais « scalability ») de la fonction logicielle virtualisée, là où le premier agent logiciel ne gère que la fonctionnalité elle-même de cette fonction virtuelle.

On rappelle en effet que la fonction logicielle virtualisée peut être implémentée par une ou plusieurs machines virtuelles, c'est-à-dire par un ou plusieurs composants VNFC.

Ainsi, lorsque le gestionnaire VNFM souhaite invoquer une fonctionnalité, il invoque le premier agent pour cette fonctionnalité, ce premier agent invoquant le deuxième agent pour que celui-ci sélectionne une ou plusieurs machines virtuelles en prenant en compte des contraintes de répartition de charge.

Dans un mode particulier de réalisation, le deuxième agent est configuré pour permettre l'enregistrement des machines virtuelles qui implémentent la fonction virtualisée VNF lorsque celles-ci rejoignent le réseau.

Ainsi, dans ce mode particulier de réalisation, l'invention se distingue du mécanisme model-driven en ce qu'elle permet :
- La gestion dynamique de nouvelles fonctions logicielles virtualisées VNF lorsque celles-ci sont intégrées dans le réseau, par la création automatique du premier agent, par enrichissement de l'architecture SDN ; et
- La gestion de la flexibilité (scalability) de ces fonctions logicielles virtualisées par le deuxième agent.

Les différentes étapes du procédé de gestion des fonctions logicielles virtualisées selon l'invention sont déterminées par des instructions de programmes d'ordinateurs.

En conséquence, l'invention vise aussi un programme d'ordinateur, sur un support d'informations, ce programme comportant des instructions adaptées à la mise en oeuvre des étapes d'un procédé de gestion selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 déjà décrite représente l'architecture NFV de l'état actuel de la technique ;
- la figure 2 déjà décrite représente l'architecture SDN de l'état actuel de la technique ;
- les figures 3A et 3B déjà décrites illustrent le mécanisme orienté modèle (« model-driven ») de la technologie OpenDaylight ;
- la figure 4A illustre les principales étapes d'un procédé de gestion de fonctions logicielles virtualisées conforme à un mode particulier de réalisation de l'invention ; et
- la figure 4B illustre un dispositif de contrôle conforme à un mode particulier de réalisation de l'invention.

### Description détaillée d'un mode de réalisation de l'invention

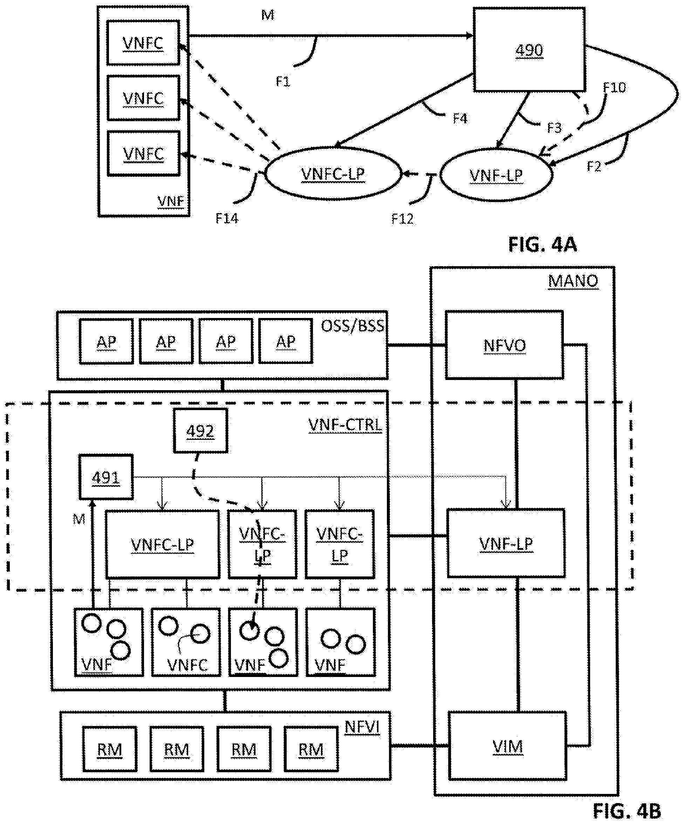

La **figure 4A** représente les principales étapes d'un procédé de gestion de fonctions logicielles virtualisées conforme à l'invention. Ce procédé permet d'intégrer la gestion des fonctions logicielles virtualisées VNF dans l'architecture modèle-orienté Opendaylight décrite en référence à la figure 3A.

Lorsqu'une nouvelle fonction virtualisée VNF doit être implémentée dans le réseau, cette fonction s'enregistre auprès du dispositif de contrôle (« VNF Controller ») VNF-CTRL conforme à l'invention en lui fournissant un modèle de données M décrivant ses fonctionnalités (étape F1).

Au cours d'une étape F2, le dispositif de contrôle VNF-CTRL génère une interface de configuration (à savoir une classe java) à partir du modèle M.

Au cours d'une étape F3, le dispositif de contrôle VNF-CTRL génère un premier agent VNF-LP (en anglais « VNF-level plugin ») qui implémente l'interface de configuration générée à l'étape F2 et installe cet agent VNF-LP dans le dispositif VNF-CTRL.

Au cours d'une étape F4, le dispositif VNF-CTRL génère un deuxième agent VNFC-LP (en anglais « VNFC-level plugin ») et installe cet agent VNFC-LP dans le dispositif de contrôle.

Ce nouvel agent VNFC-LP gère la répartition de charge de la fonction logicielle virtualisée VNF par la sélection dynamique des machines virtuelles VFNC. Il permet aussi l'enregistrement des machines virtuelles VNFC qui rejoignent le réseau pour implémenter la fonction virtualisée VNF.

Lorsqu'ensuite le dispositif de contrôle VNF-CTRL souhaite invoquer la nouvelle fonction logicielle virtualisée VNF, il utilise l'interface de configuration générée à l'étape F2 qui appelle le premier agent VNF-LP (étape F10). Cet agent VNF-LP appelle le deuxième agent VNFC-LP au cours d'une étape F12 et l'agent VNFC-LP sélectionne une machine virtuelle VFC en fonction de la répartition de charge de la fonction VNF et l'exécute au cours d'une étape F14.

La **figure 4B** représente un dispositif de contrôle VNF-CTRL conforme à l'invention dans son environnement.

Ce contrôleur VNF 490 comporte :
- un module 491 apte à recevoir le modèle de données M émis par une nouvelle fonction virtualisée VNF lorsque celle-ci rejoint le réseau, et à mettre en œuvre les étapes F2 à F4 déjà décrites pour générer une interface de configuration pour cette fonction, créer et installer les agents VNF-LP et VNFC-LP ; et
- un module 492 configuré pour, lorsqu'il est appelé par une application AP opérationnelle de la couche OSS/BSS pour invoquer une fonction logicielle virtualisée VNF, invoquer l'agent VNFC-LP généré par le module 491 pour cette fonction. Ces agents VNF-LP VNFC-LP se substituent ainsi aux éléments de gestion EM définis dans le cadre du projet NFV.

Par ailleurs, l'agent VNF-LP installé par le module 491 constitue un gestionnaire VNFM au sens du projet NFV, apte, en interaction avec les agents VNFC-LP, à prendre en charge le cycle de vie de la fonction logicielle virtualisée VNF associée.

## Revendications

1. Procédé de gestion des fonctions logicielles réseau virtualisées (VNF) dans un réseau de communication, les fonctions logicielles réseau virtualisées étant mises en oeuvre sur une architecture de type « *Network Function Virtualisation* » (NFV), ledit procédé comportant :
- une étape (F1) de réception par un dispositif de contrôle (VNF-CTRL) d'un modèle de données (M) décrivant la fonctionnalité d'une fonction logicielle réseau virtualisée (VNF) ;
- une étape (F2) de génération par ledit dispositif de contrôle (VNF-CTRL), à partir dudit modèle de données (M) reçu, d'une interface de configuration définissant ladite fonctionnalité, ladite interface de configuration étant une classe Java et étant destinée à être utilisée (F10) pour invoquer ladite fonction logicielle réseau virtualisée (VNF) ;
- une étape (F3) de génération par le dispositif de contrôle (VNF-CTRL) d'un premier agent logiciel (VNF-LP) qui implémente ladite interface de configuration générée, et une étape d'installation dudit premier agent logiciel (VNF-LP) dans le dispositif de contrôle (VNF-CTRL), ledit premier agent étant configuré pour permettre, lorsqu'il est invoqué par ladite interface de configuration, l'appel d'une machine virtuelle (VFNC) mettant en oeuvre ladite fonction logicielle réseau virtualisée (VNF).

2. Procédé de gestion selon la revendication 1, **caractérisé en ce qu'**il comporte en outre :
- une étape (F4) de génération par le dispositif de contrôle (VNF-CTRL) d'un deuxième agent logiciel (VNFC-LP) destiné à être exécuté sur invocation dudit premier agent (VNF-LP), et une étape d'installation dudit deuxième agent logiciel (VNFC-LP) dans le dispositif de contrôle (VNF-CTRL), ledit deuxième agent (VNF-LP) étant apte à sélectionner (F14) ladite machine virtuelle, en prenant compte des contraintes de répartition de charge de ladite fonction logicielle réseau virtualisée (VNF), pour gérer la répartition de charge de ladite fonction logicielle réseau virtualisée.

3. Procédé de gestion selon la revendication 2 **caractérisé en ce que** ledit deuxième agent est configuré pour permettre l'enregistrement des machines virtuelles (VNFC) implémentant ladite fonction logicielle réseau virtualisée VNF (VNF).

4. Dispositif (VNF-CTRL) de contrôle des fonctions logicielles réseau virtualisées (VNF) dans un réseau de communication, les fonctions logicielles réseau virtualisées étant mises en œuvre sur une architecture de type « *Network Function Virtualisation* » (NFV) ledit dispositif comportant :
- un module (491) de réception d'un modèle de données (M) décrivant la fonctionnalité d'une fonction logicielle réseau virtualisée (VNF) ;
- un module (491) de génération d'une interface de configuration, à partir dudit modèle de données, définissant ladite fonctionnalité, ladite interface de configuration étant une classe Java et étant destinée à être utilisée (F10) pour invoquer ladite fonction logicielle réseau virtualisée (VNF) ;
- un module (491) de génération et d'installation dans ledit dispositif d'un premier agent logiciel (VNF-LP) qui implémente ladite interface de configuration générée, ledit premier agent (VNF-LP) étant configuré pour permettre, lorsqu'il est invoqué, l'appel d'une machine virtuelle (VFNC) mettant en oeuvre ladite fonction logicielle réseau virtualisée (VNF) ;
- un module (492) configuré pour, lorsqu'il est appelé pour invoquer, en utilisant ladite interface de configuration, ladite fonction logicielle réseau virtualisée (VNF), appeler une machine virtuelle (VFNC) mettant en oeuvre ladite fonction logicielle réseau virtualisée (VNF).

5. Dispositif selon la revendication 4, **caractérisé en ce qu'**il comporte en outre :
- un module (491) de génération et d'installation dans ledit dispositif, d'un deuxième agent logiciel (VNFC-LP) destiné à être exécuté sur invocation dudit premier agent (VNF-LP), ledit deuxième agent étant apte à sélectionner (F14) ladite machine virtuelle (VFNC), en prenant compte des contraintes de répartition de charge de ladite fonction logicielle réseau virtualisée (VNF), pour gérer la répartition de charge de ladite fonction logicielle réseau virtualisée.

6. Dispositif selon la revendication 5 **caractérisé en ce que** ledit deuxième agent est configuré pour permettre l'enregistrement des machines virtuelles (VNFC) implémentant ladite fonction logicielle réseau virtualisée (VNF).

7. Dispositif selon l'une quelconque des revendications 4 à 6, **caractérisé en ce que** ledit premier agent (VNF-LP) constitue un gestionnaire (VNFM) dans l'architecture de type NFV.

## Patentansprüche

1. Verfahren zum Verwalten virtualisierter Netzwerk-Softwarefunktionen (VNF) in einem Kommunikationsnetz, wobei die virtualisierten Netzwerk-Softwarefunktionen auf einer Architektur vom Typ "Network Function Virtualisation" (NFV) umgesetzt werden, wobei das Verfahren umfasst:
- einen Schritt (F1) des Empfangens eines Datenmodells (M), das die Funktionalität einer virtualisierten Netzwerk-Softwarefunktion (VNF) beschreibt, durch eine Steuervorrichtung (VNF-CTRL);
- einen Schritt (F2) des Erzeugens einer Konfigurationsschnittstelle, die die Funktionalität definiert, durch die Steuervorrichtung (VNF-CTRL) auf Grundlage des empfangenen Datenmodells (M), wobei die Konfigurationsschnittstelle eine Java-Klasse darstellt und dazu bestimmt ist, zum Aufrufen der virtualisierten Netzwerk-Softwarefunktion (VNF) eingesetzt zu werden (F10);
- einen Schritt (F3) des Erzeugens eines ersten Softwareagenten (VNF-LP), der die erzeugte Konfigurationsschnittstelle implementiert, durch die Steuervorrichtung (VNF-CTRL) und einen Schritt des Installierens des ersten Softwareagenten (VNF-LP) in der Steuervorrichtung (VNF-CTRL), wobei der erste Agent dazu konfiguriert ist, den Aufruf einer virtuellen Maschine (VFNC) zu ermöglichen, die die virtualisierte Netzwerk-Softwarefunktion (VNF) umsetzt, wenn er von der Konfigurationsschnittstelle aufgerufen wird.

2. Verfahren zum Verwalten nach Anspruch 1, **dadurch gekennzeichnet, dass** es außerdem umfasst:
- einen Schritt (F4) des Erzeugens eines zweiten Softwareagenten (VNFC-LP), der dazu bestimmt ist, nach Aufruf des ersten Agenten (VNF-LP) ausgeführt zu werden, durch die Steuervorrichtung (VNF-CTRL) und einen Schritt des Installierens des zweiten Softwareagenten (VNFC-LP) in der Steuervorrichtung (VNF-CTRL), wobei der zweite Agent (VNF-LP) dazu geeignet ist, die virtuelle Maschine auszuwählen (F14), indem er Vorgaben der Lastverteilung der virtualisierten Netzwerk-Softwarefunktion (VNF) berücksichtigt, um die Lastverteilung der virtualisierten Netzwerk-Softwarefunktion zu verwalten.

3. Verfahren zum Verwalten nach Anspruch 2, **dadurch gekennzeichnet, dass** der zweite Agent dazu konfiguriert ist, die Registrierung der virtuellen Maschinen (VNFC) zu ermöglichen, die die virtualisierte Netzwerk-Softwarefunktion VNF (VNF) implementieren.

4. Vorrichtung (VNF-CTRL) zum Steuern der virtualisierten Netzwerk-Softwarefunktionen (VNF) in einem Kommunikationsnetz, wobei die virtualisierten Netzwerk-Softwarefunktionen auf einer Architektur vom Typ "Network Function Virtualisation" (NFV) umgesetzt werden und das Verfahren umfasst:
- ein Modul (491) zum Empfangen eines Datenmodells (M), das die Funktionalität einer virtualisierten Netzwerk-Softwarefunktion (VNF) beschreibt;
- ein Modul (491) zum Erzeugen einer Konfigurationsschnittstelle auf Grundlage des Datenmodells, das die Funktionalität definiert, wobei die Konfigurationsschnittstelle eine Java-Klasse darstellt und dazu bestimmt ist, zum Aufrufen der virtualisierten Netzwerk-Softwarefunktion (VNF) eingesetzt zu werden (F10);
- ein Modul (491) zum Erzeugen und Installieren eines ersten Softwareagenten (VNF-LP), der die erzeugte Konfigurationsschnittstelle implementiert, in der Vorrichtung, wobei der erste Agent (VNF-LP) dazu konfiguriert ist, den Aufruf einer virtuellen Maschine (VFNC) zu ermöglichen, die die virtualisierte Netzwerk-Softwarefunktion (VNF) umsetzt, wenn er aufgerufen wird;
- ein Modul (492), das dazu konfiguriert ist, wenn es aufgerufen wird, mithilfe der Konfigurationsschnittstelle die virtualisierte Netzwerk-Softwarefunktion (VNF) umzusetzen, eine virtuelle Maschine (VFNC) aufzurufen, die die virtualisierte Netzwerk-Softwarefunktion (VNF) umsetzt.

5. Vorrichtung nach Anspruch 4, **dadurch gekennzeichnet, dass** sie außerdem umfasst:
- ein Modul (491) zum Erzeugen und Installieren eines zweiten Softwareagenten (VNFC-LP) in der Vorrichtung, der dazu bestimmt ist, auf den Aufruf des ersten Agenten (VNF-LP) hin ausgeführt zu werden, wobei der zweite Agent dazu geeignet ist, die virtuelle Maschine (VFNC) auszuwählen (F14), indem er Vorgaben der Lastverteilung der virtualisierten Netzwerk-Softwarefunktion (VNF) berücksichtigt, um die Lastverteilung der virtualisierten Netzwerk-Softwarefunktion zu verwalten.

6. Vorrichtung nach Anspruch 5, **dadurch gekennzeichnet, dass** der zweite Agent dazu konfiguriert ist, die Registrierung der virtuellen Maschinen (VNFC) zu ermöglichen, die die virtualisierte Netzwerk-Softwarefunktion (VNF) implementieren

7. Vorrichtung nach einem der Ansprüche 4 bis 6, **dadurch gekennzeichnet, dass** der erste Agent (VNF-LP) einen Verwalter (VNFM) in der Architektur vom Typ NFV bildet.

## Claims

1. Method for managing virtualized software network functions (VNF) in a communication network, the virtualized software network functions being implemented in an NFV architecture, NFV being the acronym of network function virtualization, said method comprising:
- a step (F1) in which a control device (VNF-CTRL) receives a data model (M) describing the functionality of a virtualized software network function (VNF);
- a step (F2) in which said control device (VNF-CTRL) generates, on the basis of said received data model (M), a configuration interface defining said functionality, said configuration interface being a Java class and being intended to be used (F10) to invoke said virtualized software network function (VNF);
- a step (F3) in which the control device (VNF-CTRL) generates a first software agent (VNF-LP) that implements said generated configuration interface, and a step of installing said first software agent (VNF-LP) in the control device (VNF-CTRL), said first agent being configured to allow, when it is invoked by said configuration interface, a virtual machine (VFNC) implementing said virtualized software network function (VNF) to be called.

2. Management method according to Claim 1, **characterized in that** it further comprises:
- a step (F4) in which the control device (VNF-CTRL) generates a second software agent (VNFC-LP) intended to be executed on invocation of said first agent (VNF-LP), and a step in which said second software agent (VNFC-LP) is installed in the control device (VNF-CTRL), said second agent (VNF-LP) being able to select (F14) said virtual machine, taking into account scalability constraints of said virtualized software network function (VNF), so as to manage the scalability of said virtualized software network function.

3. Management method according to Claim 2, **characterized in that** said second agent is configured to allow the virtual machines (VNFC) implementing said virtualized software network function VNF (VNF) to be registered.

4. Device (VNF-CTRL) for controlling virtualized software network functions (VNF) in a communication network, the virtualized software network functions being implemented in an NFV architecture, NFV being the acronym of network function virtualization, said device comprising:
- a module (491) for receiving a data model (M) describing the functionality of a virtualized software network function (VNF);
- a module (491) for generating, on the basis of said received data model, a configuration interface defining said functionality, said configuration interface being a Java class and being intended to be used (F10) to invoke said virtualized software network function (VNF);
- a module (491) for generating and installing, in said device, a first software agent (VNF-LP) that implements said generated configuration interface, said first agent (VNF-LP) being configured to allow, when it is invoked, a virtual machine (VFNC) implementing said virtualized software network function (VNF) to be called;
- a module (492) configured to, when it is called to invoke, using said configuration interface, said virtualized software network function (VNF), call a virtual machine (VFNC) implementing said virtualized software network function (VNF).

5. Device according to Claim 4, **characterized in that** it further comprises:
- a module (491) for generating and installing, in said device, a second software agent (VNFC-LP) intended to be executed on invocation of said first agent (VNF-LP), said second agent being able to select (F14) said virtual machine (VFNC), taking into account scalability constraints of said virtualized software network function (VNF), so as so as to manage the scalability of said virtualized software network function.

6. Device according to Claim 5, **characterized in that** said second agent is configured to allow the virtual machines (VNFC) implementing said virtualized software network function (VNF) to be registered.

7. Device according to any one of Claims 4 to 6, **characterized in that** said first agent (VNF-LP) is a manager (VNFM) in the NFV architecture.
